# EUROPÄISCHE PATENTSCHRIFT

(11) **EP 1 596 242 B1**
(45) Veröffentlichungstag und Bekanntmachung des Hinweises auf die Patenterteilung: **24.08.2011**
(21) Anmeldenummer: 05010134.4
(22) Anmeldetag: 10.05.2005
(51) Int. Cl.: G02C 1/08

(54) **Brille**
Spectacles
Lunettes

(30) Priorität: 13.05.2004 DE 102004023840
(43) Veröffentlichungstag der Anmeldung: 16.11.2005
(73) Patentinhaber: ic! berlin brillenproduktions GmbH, 10405 Berlin (DE)
(72) Erfinder: Habermann, Gert, 80639 München (DE)
(74) Vertreter: Hruschka, Jürgen

(56) Entgegenhaltungen:
- EP-B- 0 863 424
- FR-A- 1 009 345
- GB-A- 2 034 072
- US-A- 3 155 982

## Beschreibung

Die vorliegende Erfindung betrifft ein Brillengestell, das ohne Schrauben im Gelenkmechanismus auskommt.

Aus dem Stand der Technik sind verschiedene Varianten von Gelenkmechanismen bei Brillengestellen bekannt. Die gängigste Variante basiert auf einem Scharniermechanismus, bei dem am Rahmen bzw. der Fassung der Brillengläser Stifte angeordnet sind, die mit einem entsprechenden Gelenkteil, welcher am fassungsseitigen Ende des Bügels angeordnet ist, kooperieren, indem beide Teile ineinander geschoben werden und mittels Spezialschrauben drehbar verbunden werden. Bei den meisten Brillenfassungen, insbesondere bei denjenigen, welche mit Korrekturgläsern verwendet werden sollen, erfolgt das Öffnen und Schließen der Fassungen zum Einsetzen oder Wechseln der Brillengläser mittels eines sogenannten Schließblocks. Denkbar ist es auch, dass die Gläser unmittelbar an einem Rahmen befestigt werden, indem Schrauben direkt in das Glas geschraubt werden. Bei rahmenlosen Brillen werden die Bügel direkt über ein Ansatzstück mit den Gläsern verschraubt.

Da das Drehgelenk während der Lebensdauer der Brille dynamisch sehr stark beansprucht wird, haben mehrere Lösungen der Einfachheit wegen auf ein herkömmliches Drehgelenk verzichtet.

So schlägt die US-Patentschrift Nr. 3,155,982 eine Brille vor, bei welcher die Brillenbügel direkt mit dem vorderen, die Gläser beinhaltenden Fassungsteil zusammenwirken. Hierzu teilt sich das Ende des fassungsseitigen Endes des Bügels in drei Blattfedern auf, wobei die mittlere Blattfeder an der Außenkante des Fassungsteils anliegt, während die beiden äußeren Blattfedern mit an ihren Enden geformten Haken in Öffnungen eingreifen, die in der Nähe der Außenkante in dem Hauptteil angeordnet sind. Ein Nachteil der in der US 3, 155, 982 beschriebenen Gelenkkonstruktion besteht darin, dass die Brillenbügel nur sehr locker mit der Fassung verbunden sind, so dass es leicht passieren kann, dass sich die Brillenbügel von der Fassung lösen, z.B. wenn die Brille auf den Boden fällt.

Eine weitere Brillengelenklösung, die ebenfalls mit einem mit drei Blattfedern versehenen Brillenbügel arbeitet, wird in der europäischen Patentschrift Nr. 0 863 424 B1 von Haffmans und Gottschling vorgeschlagen. An der Fassung ist links und rechts jeweils ein Anschlusselement vorgesehen, welches eine obere und eine untere Aussparung aufweist, die eine senkrecht zur Richtung des ausgeklappten Bügels verlaufende Gelenkachse bilden. Im ausgeklappten Zustand der Bügel durchgreifen die beiden äußeren Blattfedern der Bügel von der dem Gesicht des Brillenträgers zugewandten Fläche des Anschlusselements aus mit an ihren freien Enden vorgesehenen Biegungen die Aussparungen in dem Anschlusselement und kommen dann an der dem Gesicht des Brillenträgers abgewandten Fläche des Anschlusselements zum Anliegen, während die mittlere Blattfeder in ihrer ganzen Länge an der gegenüberliegenden Fläche des Anschlusselements anliegt. Das Anschlusselement ist dabei zweigeteilt, so dass ein leichtes Auswechseln der Gläser ermöglicht wird. Zur Stabilisierung kann eine Schließspange verwendet werden, die auf das geteilte Anschlusselement aufschiebbar ist. Dieser Mechanismus ist jedoch mit dem Nachteil behaftet, dass sich das Einsetzen der Bügel schwierig gestaltet, da die äußeren Blattfedern und die mittlere Blattfeder an einander gegenüberliegenden Flächen des Anschlusselements vorbei geführt werden müssen, wobei entgegen der Federwirkung gearbeitet werden muss und sich die Biegungen der Enden dabei als hinderlich erweisen. Darüber hinaus besteht insbesondere bei kleiner Dimensionierung dieses Gelenkes die Gefahr, dass sich der Bügel bereits bei geringer mechanischer Beanspruchung vom Anschlusselement löst.

Aus der französischen Veröffentlichung FR 2 779 241 ist ein Brillengestell mit einem Brillengelenk bekannt, welches dadurch realisiert ist, dass das fassungsseitige Ende des Bügels mit Zapfen versehen ist, welche in Aussparungen eines Anschlusselements an der Fassung eingreifen, wobei Laschen des Anschlusselements das fassungsseitige Ende beim Schwenken des Bügels übergreifen. Ein solches Gelenk gewährleistet allerdings bei übermäßiger mechanischer Beanspruchung keinen sicheren Halt des Bügels.

Die US 3,458,866 beschreibt eine Schutzbrille, bei welcher die Bügel einen im Wesentlichen vertikalen Schlitz aufweisen, in welchen ein seitliches Anschlusselement der Fassung drehbar eingerastet ist. Das vordere Ende des Bügels umgreift dabei das Anschlusselement. Eine solche Konstruktion soll, wie bei Schutzbrillen üblich, eine einfache und schnelle Montage bzw. Demontage des Bügels ermöglichen und eignet sich daher nicht für optische Brillen.

Ausgehend davon ist es die Aufgabe der vorliegenden Erfindung, ein Brillengestell zu schaffen, welches eine einfache Montage der Bügel ermöglicht und bei dem ein selbständiges Lösen der Brillenbügel bei mechanischer Beanspruchung der Brille erschwert wird.

Diese Aufgabe wird durch ein Brillengestell mit den Merkmalen des Anspruchs 1 gelöst.

Vorteilhafte Ausführungsformen der Erfindung ergeben sich aus den Unteransprüchen.

Demzufolge besteht der Kern der Erfindung darin, dass die Bügel des Brillengestells an ihrem fassungsseitigen Ende in ihrer Längsrichtung drei im Wesentlichen parallel verlaufende Blattfedern aufweisen, wobei die äußeren der drei Blattfedern an ihren Enden Gelenkelemente aufweisen, die im Verhältnis zu Gelenkelementen des Anschlusselements so angeordnet sind, dass beim Einklappen des Bügels diese äußeren Blattfedern über ein Widerlager des Anschlusselements hinweg schwenken bzw. sich aus der Ebene des Anschlusselements heraus schwenken. Das flächig ausgebildete Anschlusselement ist hierfür gemäß der Erfindung so ausgestaltet, dass dieses sich in Richtung des Bügels hinter den Gelenkelementen verjüngt, wobei der sich verjüngende Abschnitt beim Einklappen des Bügels ein Widerlager für die mittlere der drei Blattfedern des zugehörigen Bügels bildet.

Eine solche Konstruktion hat den Vorteil, dass alle drei Blattfedern auf der dem Gesicht des Brillenträgers abgewandten Fläche des Anschlusselements mit ihren vorderen, rahmenseitigen Enden zum Aufliegen kommen können, so dass ein gemeinsamer flächiger Abschluss ausgebildet wird. Darüber hinaus ermöglicht die Tatsache, dass sowohl die äußeren Blattfedern als auch die mittlere Blattfeder an der äußeren Fläche des Anschlusselements anliegen, eine einfache Montage, da die Blattfedern nicht an einander gegenüberliegenden Flächen des Anschlusselements vorbeigeführt werden müssen.

Obwohl diese Blattfedern gemeinsam an einer Fläche anliegen, gestattet die Konstruktion des erfindungsgemäßen Brillengestells mit an den äußeren Blattfedern angebrachten Gelenkelementen die Ausbildung eines Federmechanismus, welcher das Ein- bzw. Ausklappen der Bügel unterstützt.

Der Federmechanismus ergibt sich dadurch, dass sich die mittlere Blattfeder an dem sich verjüngenden Abschnitt des Anschlusselements abstützt, welcher sich in Richtung zu dem Bügel erstreckt und so das Widerlager ausbildet, während die äußeren der drei Blattfedern die Gelenkelemente aufweisen. Hierbei kann die Breite der mittleren Blattfeder maximal der Breite des Widerlagers entsprechen.

Zur Ausbildung des Drehgelenks weisen die Bügel an den äußeren Blattfedern Gelenkelemente in Form von Ösen auf, während an den Anschlusselementen entsprechende Drehzapfen vorgesehen sind. Bei montiertem Bügel greifen folglich die Drehzapfen des Anschlusselements in die Ösen der Blattfedern.

In einer anderen Ausführungsform sind die Drehzapfen des Anschlusselements annähernd konisch ausgestaltet, dass sie drehbar in einander gegenüberliegenden, konkaven Lagerschalen, die an den äußeren Blattfedern angeordnet sind, aufgenommen werden.

Das Anschlusselement kann durchgehend längs in eine obere Strebe und in eine untere Strebe aufgeteilt sein. Die Teilung des Anschlusselements erstreckt sich durch die Fassung hin bis zu den Brillengläsern. Dadurch wird ein leichtes Auswechseln der Brillengläser ermöglicht, da bei abgenommenen Bügeln die Seiten der Fassung auf einfache Weise auseinander gebogen werden können und so die Gläser zugänglich sind.

Diese Streben können gegebenenfalls mittels einer Manschette, die vor dem Anbringen des Bügels über das zu dem Bügel gehörende Anschlusselement aufschiebbar ist, miteinander biegesteif fixiert werden, um eine zusätzliche Stabilität zu erreichen.

In einer anderen Ausführungsform des Brillengestells gemäß der Erfindung sind die äußeren Blattfedern so konstruiert, dass sie eine Federkraft ausüben, die im Wesentlichen in Richtung der Gelenkachse aufeinander zu wirkt, um die Gelenkelemente der äußeren Blattfedern und des Anschlusselements in einer drehbaren, aber verliersicheren Verbindung zu halten.

Zusätzlich bewirkt die durch die äußeren Blattfedern ausgeübte Federwirkung, dass die Streben gegeneinander verspannt und die Brillengläser in den entsprechenden Abschnitten der Fassung verliersicher fixiert werden. Auf einfache Weise können die Blattfedern entgegen ihrer Federwirkung auseinander gezogen werden, um die Bügel von dem Anschlusselement zu lösen und die Fassung für ein Auswechseln der Brillengläser zugänglich zu machen.

Gemäß der Erfindung ist es vorgesehen, dass die Länge der Blattfedern und die Länge des Widerlagers so gewählt sind, dass die Federwirkung einerseits zur Erreichung einer verliersicheren Verbindung der Gelenkelemente des Bügels und des Anschlusselements ausreicht und andererseits die Blattfederwirkung der mittleren Blattfeder des Bügels ausreicht, um den Bügel in seinem ausgeklappten Zustand zu halten. Darüber hinaus, in der Ausführungsform mit zwei Streben des Anschlusselements, sind die Längen der jeweiligen Komponenten so gewählt, dass zusätzlich die Federwirkung zur Erreichung des Zusammenhaltens der beiden Streben des Anschlusselements ausreicht.

Sämtliche Bestandteile des erfindungsgemäßen Brillengestells können in einer bevorzugten Ausführungsform als Stanzteile oder Schnittteile aus Blech hergestellt werden, die noch anschließend in die gewünschte abschließende Form gebogen werden. Denkbar ist auch die Verwendung von Titan als Material der einzelnen Elemente.

Die Erfindung soll nun anhand der in den beiliegenden Zeichnungen dargestellten Ausführungsbeispiele näher beschrieben werden. Es zeigen:
- Fig. 1: eine perspektivische Ansicht eines Bügels und einer Fassung des erfindungsgemäßen Brillengestells im ausgeklappten Zustand des Bügels;
- Fig.2: eine perspektivische Ansicht des Bügels und der Fassung des erfindungsgemäßen Brillengestells im eingeklappten Zustand des Bügels; und
- Fig. 3: eine perspektivische Explosionsdarstellung einer Hälfte des Brillengestells gemäß der Erfindung.

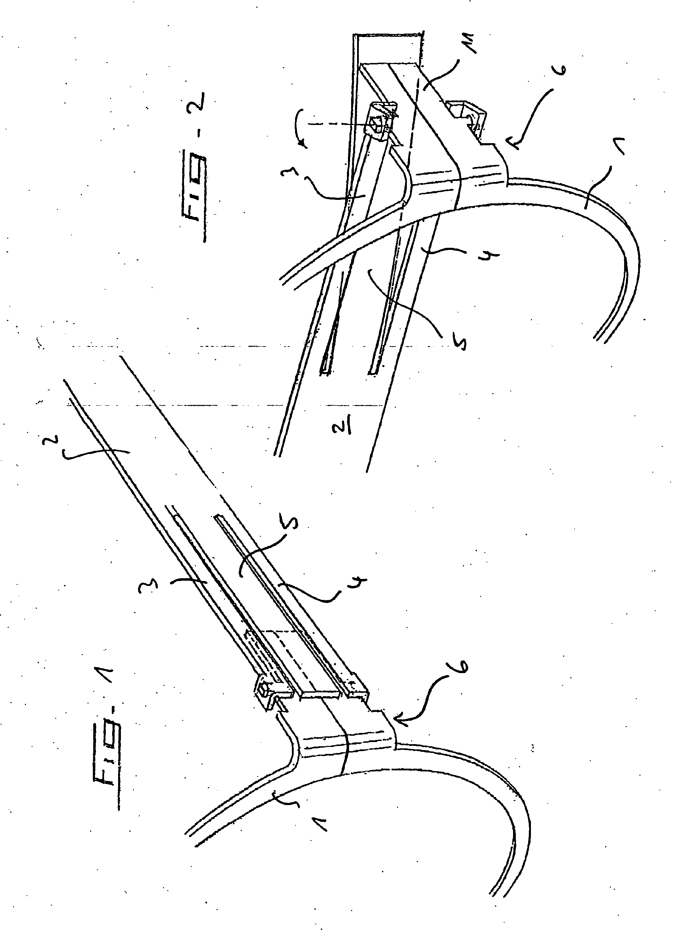

In Fig. 1 ist exemplarisch eine Hälfte eines Brillengestells gemäß der Erfindung gezeigt.

Das Brillengestell besteht im Wesentlichen aus einer Fassung 1 und einem Bügel 2. Der Bügel 2 weist an seinem fassungsseitigen Ende drei parallel verlaufende Blattfedern 3, 4 und 5 auf, zwei äußere Blattfedern 3 und 4 und eine mittlere Blattfeder 5.

Die Fassung 1 weist zu beiden Seiten ein Anschlusselement 6 auf, welches sich in Richtung zu dem Bügel 2 erstreckt. Das Anschlusselement 6 teilt sich in eine obere Strebe 7 und in eine untere Strebe 8.

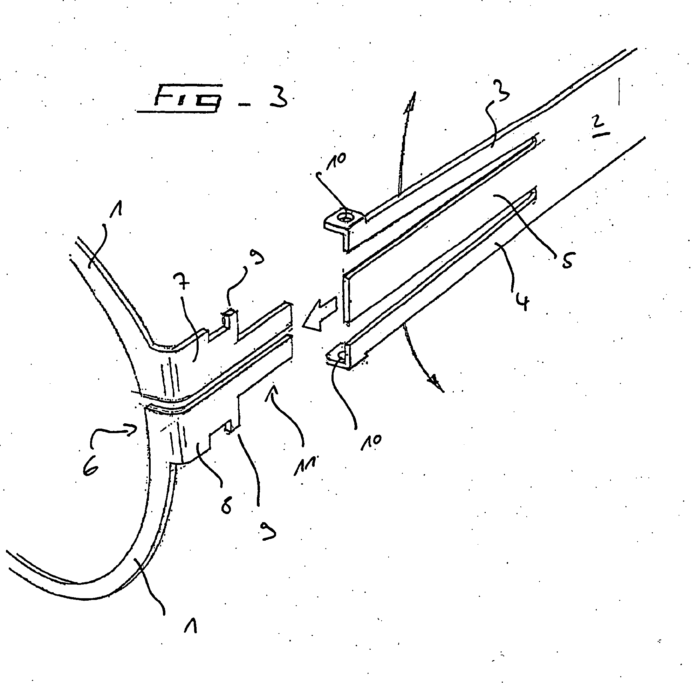

Wie in der Fig. 3 zu erkennen ist, erstreckt sich die Teilung in der Fassung 1 bis zu den hier nicht dargestellten Brillengläsern. Ist der Bügel 2 abgenommen, lässt sich die Fassung 2 seitlich leicht öffnen, indem die Streben 7 und 8 auseinander gebogen werden, um die Brillengläser einzusetzen bzw. auszuwechseln.

Die obere Strebe 7 und die untere Strebe 8 weisen unter Ausbildung einer Drehachse übereinander liegend jeweils einen Drehzapfen 9 auf. Im montierten Zustand greifen diese Drehzapfen 9 in Ösen 10 ein, die jeweils an den äußeren Blattfedern 3 und 4 vorgesehen sind.

Wie aus Fig. 3 ersichtlich, wird der Bügel 2 auf einfache Weise an dem Anschlusselement 6 dadurch befestigt, dass die äußeren Blattfedern 3 und 4 auseinander gezogen werden und über die Drehzapfen 9 geschoben werden. Die Federwirkung der äußeren Blattfedern 3 und 4 aufeinander zu bewirkt, dass die Ösen 10 verliersicher, aber dennoch drehbar über den Drehzapfen 9 einschnappen, wodurch zusätzlich die obere Strebe 7 und die untere Strebe 8 biegesteif miteinander fixiert werden.

Das Anschlusselement 6 weist hinter den Drehzapfen 9 einen sich in Richtung des Bügels 2 verjüngenden Abschnitt auf, welcher ein blattförmiges Widerlager 11 ausbildet.

Wie in Fig. 1 zu erkennen ist, kommt die mittlere Blattfeder 5 im ausgeklappten Zustand an der dem Brillenträger abgewandten Fläche des Widerlagers 11 zum Anliegen. Beim Einklappen, wie dies die Fig. 2 zeigt, stützt sich die mittlere Blattfeder 5 an dem Widerlager 11 ab, um einen Rückfedermechanismus auszubilden.

Das Widerlager 11 weist die gleiche Breite wie die mittlere Blattfeder 5 auf und ist dabei so geformt, dass die äußeren Blattfedern 3 und 4 ungehindert über das Widerlager 11 beim Einklappen des Bügels 2 laufen können.

## Patentansprüche

1. Brillengestell mit links und rechts je einem Bügel (2) und mit einer Fassung (1), die links und rechts je ein flächig ausgebildetes Anschlusselement (6) aufweist, dessen bügelseitiges Ende in Richtung des Bügels (2) im ausgeklappten Zustand weist, wobei die Bügel (2) an ihrem fassungsseitigen Ende aus drei Blattfedern (3,4,5) bestehen, deren Blattfläche im ausgeklappten Zustand des Bügels (2) im Wesentlichen in der Ebene des Anschlusselements (6) verläuft, und an dem Anschlusselement (6) Gelenkelemente (9) angeordnet sind, welche mit an den beiden äußeren Blattfedern (3,4) der drei Blattfedern angebrachten Gelenkelementen (10) unter Ausbildung eines Drehgelenks zusammenwirken, und wobei jedes Anschlusselement (6) so ausgebildet ist, dass es ein Widerlager (11) für die mittlere (5) der drei Blattfedern des zugehörigen Bügels (2) beim Einklappen des Bügels (2) bildet, **dadurch gekennzeichnet, dass** die Gelenkelemente (10) an den äußeren Blattfedern (3,4) im Verhältnis zu den Gelenkelementen (9) des zugehörigen Anschlusselements (6) so angeordnet sind, dass alle drei Blattfedern (3,4,5) an der zu dem Gesicht des Brillenträgers abgewandten Seite des Anschlusselements (6) liegen, wobei sich das flächig ausgebildete Anschlusselement (6) in Richtung des Bügels (2) hinter den Gelenkelementen (9) verjüngt und der sich verjüngende Abschnitt des Anschlusselements (6) beim Einklappen des Bügels (2) das Widerlager (11) für die mittlere (5) der drei Blattfedern des zugehörigen Bügels (2) bildet, so dass beim Einklappen des zugehörigen Bügels (2) die äußeren Blattfedern (3,4) des Bügels (2) über das Widerlager (11) des Anschlusselements (6) hinweg schwenkbar sind.

2. Brillengestell nach Anspruch 1, bei dem die Gelenkelemente des Anschlusselements (6) aus Drehzapfen (9) bestehen

3. Brillengestell nach Anspruch 2, bei dem an den äußeren Blattfedern (3,4) des zu dem Anschlusselement (6) gehörenden Bügels (2) Ösen (10) angebracht sind, in die die Drehzapfen (9) des Anschlusselements (6) eingreifen.

4. Brillengestell nach Anspruch 1, bei dem die Gelenkelemente des Anschlusselements (6) aus Lagerzapfen bestehen.

5. Brillengestell nach Anspruch 4, bei dem an den äußeren Blattfedern (3,4) des zu dem Anschlusselement (6) gehörenden Bügels (2) Lagerschalen angebracht sind, in die die Lagerzapfen des Anschlusselements eingreifen.

6. Brillengestell nach einem der vorhergehenden Ansprüche, bei dem das Anschlusselement (6) durchgehend in eine obere Strebe (7) und eine untere Strebe (8) geteilt ist.

7. Brillengestell nach Anspruch 6, bei dem sich die Teilung des Anschlusselements (6) durch die Fassung (1) hindurch bis zu den von der Fassung aufgenommenen Brillengläsern erstreckt.

8. Brillengestell nach einem der Ansprüche 6 oder 7, bei dem vor dem Verbinden des Bügels (2) mit dem Anschlusselement (6) eine Manschette über das Anschlusselement (6) aufschiebbar ist.

9. Brillengestell nach einem der vorhergehenden Ansprüche, bei dem alle Teile aus Blech und/oder Titan gefertigt sind.

10. Brillengestell nach einem der vorhergehenden Ansprüche, bei dem die äußeren Blattfedern (3,4) im Wesentlichen in Richtung der Gelenkachse eine Federwirkung ausüben, welche die Gelenkelemente (9,10) des Bügels (2) und des Anschlusselements (6) in einer drehbaren und verliersicheren Verbindung hält.

11. Brillengestell nach Anspruch 10, bei dem die Federwirkung darin besteht, dass die von der einen äußeren Blattfeder (3 oder 4) ausgeübte Federkraft in Richtung auf die anderen Blattfeder (4 oder 3) zu wirkt.

12. Brillengestell nach einem der Ansprüche 10 oder 11, bei dem die Länge der Blattfedern (3,4,5) des Bügels (2) und die Länge des Widerlagers (11) so gewählt sind, dass die Federwirkung zur Erreichung einer verliersicheren Verbindung der Gelenkelemente (9,10) des Bügels (2) und des Anschlusselements (6) ausreicht und darüber hinaus die Blattfederwirkung der mittleren Blattfeder (5) des Bügels (2) ausreicht, um den Bügel (2) in seinem eingeklappten Zustand zu halten.

13. Brillengestell nach einem der Ansprüche 10 bis 12 und einem der Ansprüche 6 oder 7, bei dem die Länge der Blattfedern (3,4,5) des Bügels (2) und die Länge des Widerlagers (11) so gewählt sind, dass die Federwirkung zur Erreichung des Zusammenhaltens der beiden Streben (7,8) des Anschlusselements (6) ausreicht und darüber hinaus die Blattfederwirkung der mittleren Blattfeder (5) des Bügels (2) ausreicht, um den Bügel (2) in seinem eingeklappten Zustand zu halten.

## Claims

1. Glasses frame having respectively one temple (2) on the left and on the right and having a rim (1) which has respectively one planar connecting element (6) on the left and on the right, the end of which, which is on the side of the temple, points in the direction of the temple (2) in the folded-out state, wherein the temples (2) consist of three leaf springs (3, 4, 5) on their end on the side of the rim, the leaf surface of which is substantially coplanar to the connecting element (6), when the temple (2) is folded out, and wherein joint elements (9) are disposed on the connecting element (6), which cooperate with joint elements (10) which are attached to the two external leaf springs (3, 4) of the three leaf springs such that a swivel joint is formed, and wherein each connecting element (6) is made to form an abutment (11) for the central leaf spring (5) of the three leaf springs of the respective temple (2) during folding in the temple (2), **characterised in that** the joint elements (10) attached to the external leaf springs (3, 4) are disposed relative to the joint elements (9) attached to the respective connecting element (6) such that all three leaf springs (3, 4, 5) are located on that side of the connecting element (6) that is facing away from the face of the person wearing the glasses, wherein the planar connecting element (6) is tapered in the direction of the temple (2) behind the joint elements (9) and the tapered portion of the connecting element (6) forms the abutment (11) for the central leaf spring (5) of the three leaf springs of the respective temple (2) during folding in the temple (2) so that the external leaf springs (3, 4) of the temple (2) are pivotable across the abutment (11) of the connecting element (6) during folding in the respective temple (2).

2. Glasses frame according to claim 1, in which the joint elements of the connecting element (6) consist of pivot pins (9).

3. Glasses frame according to claim 2 in which loops (10) are attached on the external leaf springs (3, 4) of the temple (2) associated with the connecting element (6), with which loops (10) the pivot pins (9) of the connecting element (6) do engage.

4. Glasses frame according to claim 1, in which the joint elements of the connecting elements (6) consist of bearing pins.

5. Glasses frame according to claim 4, in which bearing shells are attached on the external leaf springs (3, 4) of the temple (2) associated with the connecting element (6), with which bearing shells the bearing pins of the connecting element do engage.

6. Glasses frame according to one of the foregoing claims, in which the connecting element (6) is divided into an upper bar (7) and a lower bar (8) in its entire length.

7. Glasses frame according to frame 6, in which the division of the connecting element (6) extends through the rim (1) to the lenses, which are received.

8. Glasses frame according to any of the claims 6 or 7, in which a sleeve can be pushed over the connecting element (6) before the temple (2) is connected to the connecting element (6).

9. Glasses frame according to one of the foregoing claims, in which all components are made of sheet metal and/or titanium.

10. Glasses frame according to one of the foregoing claims, in which the external leaf springs (3, 4) substantially have a spring effect in the direction of the joint axis, which attaches the joint elements (9, 10) of the temple (2) and the connecting elements (6) in a pivotable and captive connection.

11. Glasses frame according to claim 10, in which the spring effect consists of the fact that the spring force, which is applied by one external leaf spring (3 or 4), acts in direction to the other leaf spring (4 or 3).

12. Glasses frame according to any of the claims 10 or 11, in which the length of the external leaf springs (3, 4, 5) of the temple (2) and the length of the abutment (11) are such that the spring effect is sufficient to achieve a captive connection between the joint elements (9, 10) of the temple (2) and the connection elements (6) and furthermore that the leaf spring effect of the central leaf spring (5) of the temple (2) is sufficient for holding the temple in its folded-in state.

13. Glasses frame according to any of the claims 10 to 12 and any of the claims 6 or 7, in which the length of the leaf springs (3, 4, 5) of the temple (2) and the length of the abutment (11) are such, that the spring effect is sufficient for holding together the two bars (7, 8) of the connecting element (6) and furthermore that the spring leaf effect of the central leaf spring (5) of the temple (2) is sufficient for holding the temple in its folded-in state.

## Revendications

1. Châssis de lunettes comprenant une branche respective (2), à gauche et à droite, et une monture (1) présentant, à gauche et à droite, un élément respectif de liaison (6) de réalisation aplatie, dont l'extrémité située côté branche pointe en direction de ladite branche (2) à l'état déployé par pivotement, sachant que les branches (2) sont constituées, à leur extrémité située côté monture, de trois lames de ressort (3, 4, 5) dont la surface s'étend, pour l'essentiel, dans le plan de l'élément de liaison (6) à l'état de la branche (2) déployé par pivotement, et que des éléments d'articulation (9), situés sur ledit élément de liaison (6), coopèrent avec des éléments d'articulation (10) implantés sur les deux lames de ressort extérieures (3, 4) au sein des trois lames de ressort, en donnant naissance à une articulation tournante, et sachant que chaque élément de liaison (6) est réalisé de manière à former, lors du repli pivotant de la branche (2), une contre-butée (11) dédiée à la lame médiane (5) au sein des trois lames de ressort de la branche (2) associée, **caractérisé par le fait que** les éléments d'articulation (10) situés sur les lames de ressort extérieures (3, 4) occupent, par rapport aux éléments d'articulation (9) de l'élément de liaison (6) associé, des positions telles que les trois lames de ressort (3, 4, 5) soient toutes placées du côté de l'élément de liaison (6) qui est tourné à l'opposé du visage du porteur des lunettes, sachant que ledit élément de liaison (6), de réalisation aplatie, se rétrécit en direction de la branche (2) derrière les éléments d'articulation (9), et que la région se rétrécissant sur ledit élément de liaison (6) forme, lors du repli pivotant de la branche (2), la contre-butée (11) dédiée à la lame médiane (5) au sein des trois lames de ressort de la branche (2) associée, de telle sorte que, lors dudit repli pivotant de ladite branche (2) associée, les lames de ressort extérieures (3, 4) de ladite branche (2) puissent pivoter au-delà de la contre-butée (11) dudit élément de liaison (6).

2. Châssis de lunettes selon la revendication 1, dans lequel les éléments d'articulation de l'élément de liaison (6) se présentent comme des tourillons (9).

3. Châssis de lunettes selon la revendication 2, dans lequel des oeillets (10), dans lesquels pénètrent les tourillons (9) de l'élément de liaison (6), sont pratiqués sur les lames de ressort extérieures (3, 4) de la branche (2) associée audit élément de liaison (6).

4. Châssis de lunettes selon la revendication 1, dans lequel les éléments d'articulation de l'élément de liaison (6) se présentent comme des tenons de montage.

5. Châssis de lunettes selon la revendication 4, dans lequel des augettes de support, dans lesquelles pénètrent les tenons de montage de l'élément de liaison, sont ménagées sur les lames de ressort extérieures (3, 4) de la branche (2) associée audit élément de liaison (6).

6. Châssis de lunettes selon l'une des revendications précédentes, dans lequel l'élément de liaison (6) est scindé, de manière continue, en une membrure supérieure (7) et en une membrure inférieure (8).

7. Châssis de lunettes selon la revendication 6, dans lequel la subdivision de l'élément de liaison (6), traversant la monture (1) de part en part, s'étend jusqu'aux verres de lunettes logés dans ladite monture.

8. Châssis de lunettes selon l'une des revendications 6 ou 7, dans lequel une manchette peut être enfilée sur l'élément de liaison (6) préalablement au rattachement de la branche (2) audit élément de liaison (6).

9. Châssis de lunettes selon l'une des revendications précédentes, dans lequel toutes les pièces sont fabriques en tôle et/ou en du titane.

10. Châssis de lunettes selon l'une des revendications précédentes, dans lequel les lames de ressort extérieures (3, 4) exercent, pour l'essentiel en direction de l'axe de l'articulation, un effet d'élasticité qui maintient les éléments d'articulation (9, 10) de la branche (2), et de l'élément de liaison (6), dans un état de solidarisation rotative et imperdable.

11. Châssis de lunettes selon la revendication 10, dans lequel l'effet d'élasticité consiste en ce que la force élastique, développée par l'une (3 ou 4) des lames de ressort extérieures, agit en direction de l'autre lame de ressort (4 ou 3).

12. Châssis de lunettes selon l'une des revendications 10 ou 11, dans lequel la longueur des lames de ressort (3, 4, 5) de la branche (2), et la longueur de la contre-butée (11), sont choisies de telle sorte que l'effet d'élasticité soit suffisant pour obtenir une solidarisation imperdable des éléments d'articulation (9, 10) de la branche (2) et de l'élément de liaison (6), et que, de surcroît, l'action exercée par la lame de ressort médiane (5) de ladite branche (2) soit suffisante pour maintenir ladite branche (2) dans son état replié par pivotement.

13. Châssis de lunettes selon l'une des revendications 10 à 12 et l'une des revendications 6 ou 7, dans lequel la longueur des lames de ressort (3, 4, 5) de la branche (2), et la longueur de la contre-butée (11), sont choisies de telle sorte que l'effet d'élasticité soit suffisant pour obtenir la cohésion des deux membrures (7, 8) de l'élément de liaison (6), et que, de surcroît, l'action exercée par la lame de ressort médiane (5) de ladite branche (2) soit suffisante pour maintenir ladite branche (2) dans son état replié par pivotement.
